# EUROPEAN PATENT APPLICATION

(11) **EP 3 200 318 A1**
(43) Date of publication of application: **02.08.2017**
(21) Application number: 15843528.9
(22) Date of filing: 14.09.2015
(51) Int. Cl.: H02K 1/14, H02K 1/16, H02K 1/22, H02K 1/27, H02K 21/16

(54) **BRUSHLESS MOTOR**

(30) Priority: 22.09.2014 JP 2014192774
(71) Applicant: Mitsuba Corporation, Kiryu-shi Gunma 376-8555 (JP)
(72) Inventor: IKENO Hirotatsu, Kiryu-shi Gunma 376-8555 (JP); AOKI Takamasa, Kiryu-shi Gunma 376-8555 (JP); OGAWA Yuya, Kiryu-shi Gunma 376-8555 (JP)
(74) Representative: Hoffmann Eitle
(86) International application number: PCT/JP2015/075950
(87) International publication number: WO 2016/047476

(57) **Abstract**

A toothed part 22 has a tooth main body 24 and a tip part 25. A pair of slant parts 26 are formed in a protruding manner on both sides of the tooth tip part 25. A tip surface 27 is formed on the inner diameter side end surface of the tip part 25 so as to face a magnet 15 through an air gap g. A groove part 28 is formed so as to be recessed in the center of the tip surface 27 and to extend in the axial direction. A depth d of the groove part 28 is set to satisfy 0 < d ≤ (Lx - Rt) /3 . A width Wg of the groove part 28 is set to satisfy Wt > Wg >_ Wt/2 (Lx: distance between the center of the rotor and a tooth/slant intersection X, the intersection X being the intersection between an extension line P of a circumferential side surface of the tooth main body and an extension line Q of a slope of the slant part, Rt: radius of the inner diameter of the tooth tip surface, Wt: width of the tooth main body).

## Description

### Technical Field

The present invention relates to a high-torque and low-cogging torque brushless motor and, more particularly, to a brushless motor suitably applied to a drive source for an electric power steering device.

### Background Art

In recent years, many automobiles are equipped with a so-called power steering device for assisting a steering force. As the power steering device, an electric type power steering device (so-called electric power steering device: EPS) has prevailed recently under circumstances where engine load reduction, weight reduction, and the like are required. Although complicated control is required for a motor that serves as a power source for the electric power steering device, a brushless motor is preferably used from a viewpoint of easiness of maintenance. In recent years, with improvement of performance of a control element or controller, an EPS system using the brushless motor is becoming mainstream.

However, the EPS system has a problem that, when cogging torque of the motor is increased, steering feeling at non-energization is deteriorated. In brushless motors for EPS, cogging torque is one of the important performance elements. To reduce cogging torque, there are known a method of forming an auxiliary groove at the tip of a salient pole of a stator field core and a method of applying skew to a rotor or a stator (see Patent Document 1) . The above method, such as formation of the auxiliary groove or application of the skew, is adopted in many brushless motors for EPS.

### Citation List

### Patent Document

[Patent Document 1] Jpn. Pat. Appln. Laid-Open Publication No. 10-42531

### Disclosure of the Invention

### Problems to be Solved by the Invention

However, forming the auxiliary groove or applying skew cannot always reduce cogging torque efficiently. Further, even if cogging torque can be reduced, torque may be reduced in association with formation of the groove or application of the skew. When the torque is reduced, the physical size of motor is forced to be increased in order to obtain a desired output, which runs counter to a demand for reduction in motor size and weight.

### Means for Solving the Problems

A brushless motor according to the present invention includes: a stator having a ring-shaped back core part and a plurality of toothed parts formed so as to protrude inward in the radial direction from the back core part; and a rotor rotatably disposed inside the stator and having a rotor core mounted on the rotation axis and a magnet disposed on the outer peripheral surface of the rotor core. The toothed parts each include: a tooth main body extending in the radial direction from the back core part; a tip part formed on the inner diameter side of the tooth main body so as to be integrate with the tooth main body and having a pair of slant parts formed on both sides thereof so as to protrude in the circumferential direction; a tip surface formed on the inner diameter side end surface of the tip part so as to face the magnet through an air gap; and a groove part formed so as to be recessed in the center of the tip surface in the circumferential direction and to extend along the rotation axis direction. Assuming that the distance between the center of the rotor and a tooth/slant intersection X, which is the intersection between an extension line P of a circumferential side surface of the tooth main body and an extension line Q of a slope of the slant part, is Lx, and the radius of the inner diameter of the tooth tip surface is Rt, a depth d of the groove part is set to a value 1/3 or less of the difference between Lx and Rt (0 < d ≤ (Lx - Rt) /3), and a width Wg of the groove part is smaller than a width Wt of the tooth main body and set to a value 1/2 or more of the width Wt (Wt > Wg ≥ Wt/2).

In the present invention, the groove part is formed in the center of the tooth tip surface so as to be recessed, and the depth d and width Wg of the groove part are set to satisfy 0 < d ≤ (Lx - Rt) /3 and Wt > Wg ≥ Wt/2, respectively. This configuration makes it possible to magnetically saturate the slant part, allowing the amount of magnetic flux flowing in the toothed part at the time of non-energized rotation to be controlled, which in turn can reduce cogging torque. Further, the depth of the groove part is reduced as compared with that of a conventional auxiliary groove, so that the air gap in the groove part can be reduced. This increases effective magnetic flux to suppress a reduction of torque.

In the above brushless motor, the bottom surface of the groove part may be formed into a circular arc shape centered at the center of the rotation axis and concentric with the tip surface. With this configuration, the air gap is equalized at the tooth tip part, whereby cogging torque can be reduced.

The magnet may have a circular-arc shaped outer peripheral surface, and the outer peripheral surface of the magnet may have a different curvature from those of the bottom surface of the groove part and the tip surface. With the above configuration, a variation in magnetic flux between adjacent magnets can be made smooth, whereby cogging torque can be reduced.

The magnet may have a D-shape in cross section perpendicular to the axial direction and have a circular-arc shaped outer peripheral surface and a flat inner peripheral surface. With this configuration, the thickness of the magnet center part is increased to achieve increase in effective magnetic flux of the magnet, thereby compensating for a torque reduction due to formation of the groove part. Further, the rotor core may have a regular polygonal shape in cross section and have a flat part constituting the outer peripheral surface thereof, to which the inner peripheral surface of the magnet is fitted, and the groove part may be configured such that a variation in the distance between a corner part formed between adjacent flat parts and the toothed part caused in association with rotation of the rotor is alleviated.

A length Ls of the stator core in the axial direction may be set larger than a length Lr of the rotor core in the axial direction (Ls > Lr) . With this configuration, leakage of magnetic flux from the end surface in the axial direction can be suppressed, whereby cogging torque can be reduced.

The rotor may have a skew structure, and the skew angle θ of the rotor may be set in a range of 20° to 24°. With this configuration, the order component of induced voltage generated in a brushless motor having a 2P3Sxn structure that is involved in cogging torque can be suppressed, whereby cogging torque can be reduced.

The brushless may be used as a drive source for an electric power steering device . The brushless motor of the invention is a high-torque and low-cogging torque motor in which reduction in cogging torque can be achieved. By using this brushless motor as a drive source for an electric power steering device, smooth and comfortable steering operation can be realized.

### Advantages of the Invention

According to the brushless motor of the present invention, the groove part is formed in the center of the tooth tip surface so as to be recessed, and the depth d and the width Wg of the groove part are set to satisfy 0 < d ≤ (Lx - Rt)/3 and Wt > Wg ≥ Wt/2, respectively (Lx: distance between the center of the rotor and a tooth/slant intersection X which is the intersection between an extension line P of a circumferential side surface of the tooth main body and an extension line Q of a slope of the slant part, Rt: radius of the inner diameter of the tooth tip surface, Wt: width of the tooth main body) . As a result, it is possible to magnetically saturate the slant part formed in a protruding manner at the tooth tip part, allowing the amount of magnetic flux flowing in the toothed part to be controlled. Further, the depth of the groove part is reduced, so that the air gap in the groove part can be reduced as compared with a conventional auxiliary groove having a large depth, which in turn can increase effective magnetic flux. As a result, there can be provided a high-torque and low-cogging torque brushless motor in which the amount of magnetic flux flowing in the toothed part can be controlled to reduce cogging torque, while ensuring torque.

### Brief Description of the Drawings

FIG. 1 is a cross-sectional view illustrating a configuration of a brushless motor according to an embodiment of the present invention;
FIG. 2 is a cross-sectional view taken along line A-A of FIG. 1;
FIG. 3 is an enlarged view illustrating a configuration in the vicinity of a tooth tip part in the brushless motor of FIG. 1;
FIG. 4 is an explanatory view illustrating a state where a rotor core and a magnet are moved in association with rotation of the rotor;
FIG. 5 is a graph illustrating the relationship between a depth d of a groove part and torque;
FIG. 6 is an explanatory view illustrating a modification of the shape of the groove part; and
FIG. 7 is an enlarged view illustrating a configuration in the vicinity of a tooth tip part in a conventional brushless motor.

### Best Mode for Carrying Out the Invention

An embodiment of the present invention will be described below in detail with reference to the accompanying drawings. The object of the embodiment is to provide a high-torque and low-cogging torque brushless motor capable of reducing cogging torque while minimizing reduction in torque.

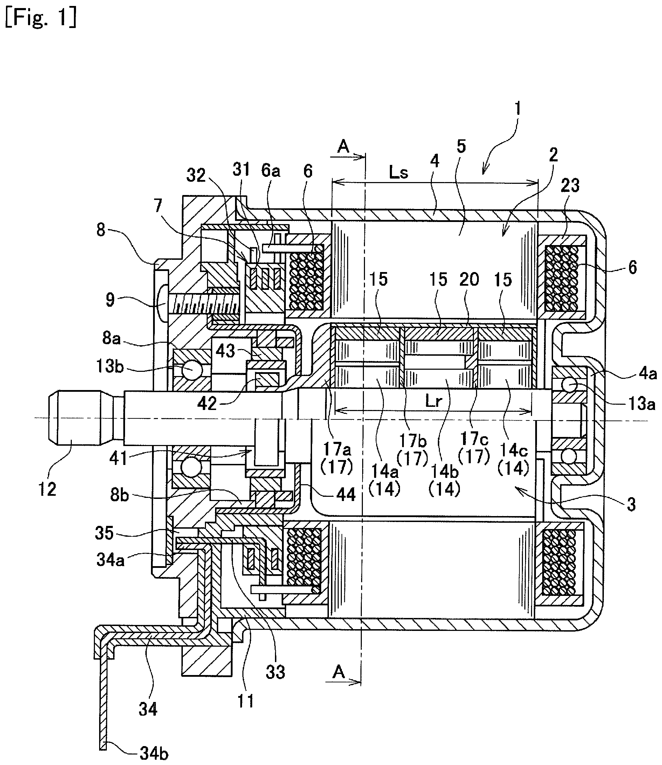

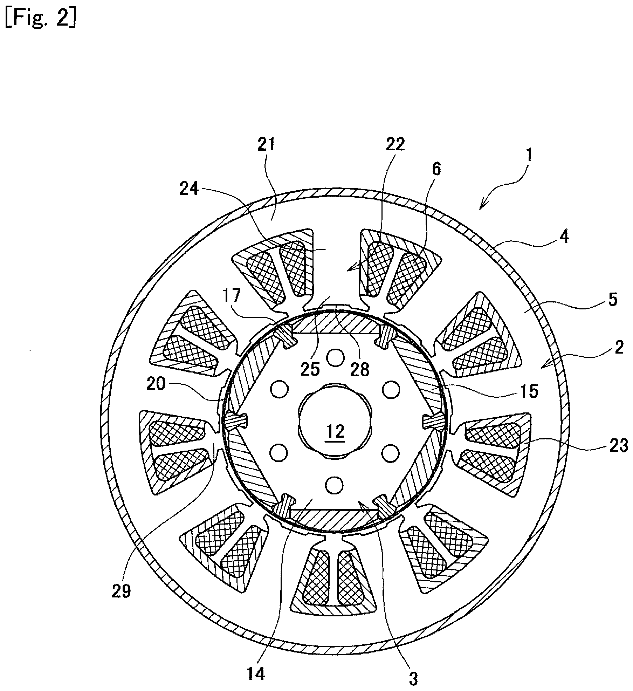

FIG. 1 is a cross-sectional view illustrating a configuration of a brushless motor 1 (hereinafter, abbreviated as "motor 1") according to an embodiment of the present invention. FIG. 2 is a cross-sectional view taken along line A-A of FIG. 1. The motor 1 is used as, e.g., a power source for a column-assist type EPS. The motor 1 imparts an operation assist force to a steering shaft of an automobile while being normally and reversely rotated in accordance with the steering direction. As illustrated in FIG. 1, the motor 1 is an inner rotor type brushless motor in which a stator 2 is provide outside a rotor 3 . The motor 1 is mounted to an unillustrated deceleration mechanism part provided in the steering shaft. The rotation of the motor 1 is transmitted, while being decelerated, to the steering shaft through the deceleration mechanism part.

The stator 2 is fixed to the inside of a bottomed cylindrical housing 4 made of iron and the like. The housing 4 serves as a motor casing. The stator 2 is fixed to the inner peripheral surface of the housing 4 by a fixing means such as press-fitting. The stator 2 has a stator core 5 and a coil 6 wound around the stator core 5 . The stator core 5 is formed by laminating a number of steel sheet materials (e.g., electromagnetic steel sheet). As illustrated in FIG. 2, the stator core 5 has a ring-shaped back core part 21 and a plurality of toothed parts 22. The toothed parts 22 are formed at equal intervals so as to protrude inward in the radial direction from the back core part 21. The coil 6 is wound around each of the toothed part 22 through a synthetic resin insulator 23.

The toothed part 22 is constituted of a tooth main body 24 and a tooth tip part 25. The tooth main body 24 extends inward in the radial direction from the back core part 21. The tooth tip part 25 is formed on the inner diameter side of the tooth main body 24 so as to be integrate with the tooth main body 24. A pair of slant parts 26 are formed on both sides of the tooth tip part 25 so as to protrude in the circumferential direction. The inner diameter side end surface of the tooth tip part 25 serves as a tooth tip surface 27. The tooth tip surface 27 faces the rotor 3 through an air gap G. A groove part 28 is formed so as to be recessed in the center of the tooth tip surface 27 in the circumferential direction. The groove part 28 is formed along the axial direction so as to extend over the entire length of the stator core 5.

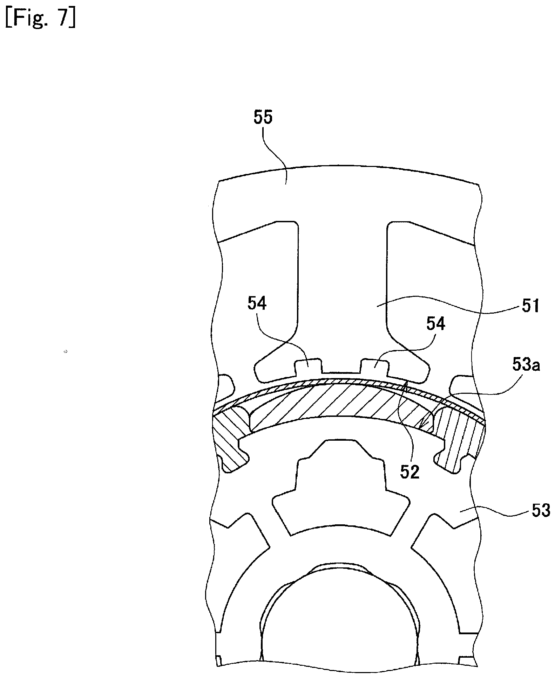

A slot 29 is formed between adjacent toothed parts 22 . The motor 1 has nine toothed parts 22 and thus has a nine-slot structure. The coil 6 is accommodated in the slot 29. In the motor 1, an opening width Wa between the adjacent toothed parts 22 is set larger than in a conventional motor (see FIG. 7) . In the motor 1, a ratio between the width of the toothed part and the opening width Wa is larger than in a conventional motor. More specifically, the ratio between the width of the toothed part and the opening width Wa is about 18% larger than a ratio between the width of a toothed part 51 in the circumferential direction and an opening width between adjacent toothed parts 51. As the opening width between the adj acent toothed parts is increased, leakage inductance is reduced. As a result, inductance is reduced to increase a motor rotation speed. Further, widths of the toothed part 22 and back core part 21 are set (about 19%) larger than those of the toothed part 51 and a back core part 55 illustrated in FIG. 7. As the width of each of the toothed part 22 or the back core part 21 is increased, the width of a magnetic path is increased to suppress magnetic saturation. As a result, leakage magnetic flux is reduced to increase effective magnetic flux, which leads to an increase in torque.

A bus bar unit 7 made of synthetic resin is mounted to one end side of the stator core 5. The stator core 5 mounted with the bus bar unit 7 is then subjected to electrical connection as described later. After the establishment of electrical connection, the stator core 5 is press-fitted and fixed inside the housing 4. A bus bar 31 made of copper is formed inside the main body of the bus bar unit 7 by insert molding. In the present embodiment, the bus bars 31 are provided as many as the number (in this example, four bas bars 31 (three for U-, V-, and W-phases, and not shown one for connecting between the three phases) are provided) of phases of the motor 1. Each bus bar 31 has a plurality of power supply terminals 32 protruding in the radial direction. The power supply terminals 32 radially protrude from the periphery of the bus bar unit 7. An end part 6a of the coil 6 is drawn to one end side of the stator core 5. In mounting the bus bar unit 7, the power supply terminals 32 are welded to the coil end part 6a, and thus each coil 6 is electrically connected to the power supply terminals 32 corresponding to the phase thereof. The end portion of the bus bar 31 extends in the axial direction from the end surface of the bus bar unit 7 to form a bus bar terminal 33.

A bracket 8 made of an aluminum alloy is mounted to the opening of the housing 4. A terminal unit 11 is fixed to the inside of the bracket 8 with a screw 9. A power terminal 34 to be joined to the bus bar terminal 33 is formed in the terminal unit 11 by insert molding. The power terminal 34 is provided for each of U-, V-, and W-phases. One end side 34a of the power terminal 34 is disposed inside an opening part 35. The other end side 34b of the power terminal 34 is drawn outside the motor 1. In a state where the bracket 8 is assembled to the housing 4, the bus bar terminal 33 extending in the axial direction from the bus bar unit 7 faces the power terminal 34 in parallel inside the opening part 35. In the motor 1, after the bracket 8 is mounted to the housing 4, the bus bar terminal 33 and the power terminal 34 are welded and fixed to each other inside the opening part 35.

The rotor 3 is inserted inside the stator 2. The rotor 3 has a shaft 12 serving as a motor rotation axis. The shaft 12 is rotatably supported by ball bearings (hereinafter, abbreviated as "bearings") 13a and 13b. The bearing 13a is fixed to a bearing accommodating part 4a formed in the center of the bottom part of the housing 4. The bearing 13b is fixed to a bearing fixing part 8a formed in the center of the bracket 8.

Three rotor cores 14 (14a to 14c) arranged in the axial direction are fixed to the shaft 12. The rotor 3 has a step skew structure with three stages. In this case, assuming that the number of poles is P, the number of slots is S, and a numerical value obtained by dividing 360 by the least common multiple of P and S is U, and V = 360/ (P/2) /5 (┌/5┘ : considering fifth-order component) U ≤ skew angle θ ≤ V is satisfied. Since the motor 1 has a 6P9S structure, so that 20° ≤ skew angle θ ≤ 24° is satisfied, and here, the skew angle θ is set to 22° . By such a setting, the order component (6P9S is 18th-order) of cogging torque caused by a pole-slot relationship can be suppressed as compared to a conventional motor, whereby cogging torque can be reduced.

The rotor core 14 is also formed by laminating a plurality of steel sheet materials. Assuming that the thickness of the rotor core 14 is Lr, and the thickness of the stator core 5 is Ls, Ls > Lr is satisfied. That is, the length of the stator core 5 in the axial direction is longer than the length of the rotor core 14 in the axial direction, so that the stator core 5 is overhung in the axial direction. By making the stator side longer than the rotor side, leakage of magnetic flux in the axial direction is suppressed, and thus cogging torque is reduced.

The rotor 3 has an SPM (Surface Permanent Magnet) structure. Magnets (permanent magnets) 15 are mounted to the outer periphery of the rotor core 14 so as to face the toothed parts 22 through the air gap G. More specifically, six magnets 15 are mounted in the circumferential direction, and thus the motor 1 has a 6-pole 9-slot (6P9S) structure. As illustrated in FIG. 2, in the motor 1, a segment type magnet having a structure in which the axial direction cross section (cross section perpendicular to the extending direction of the shaft 12) thereof has a D-shape is used as the magnet 15 . The magnet 15 has a circular arc outer peripheral part 15a and a flat inner peripheral part 15b. An arc center Om of the outer peripheral part 15a does not coincide with a center Or of the rotor 3, that is, the outer peripheral part 15a is eccentric with respect to the rotor 3. By making the circular arc of the outer peripheral part 15a eccentric, a variation in magnetic flux between adjacent magnets 15 can be made smooth, whereby cogging torque can be reduced.

The magnet 15 having the D-shaped cross section is larger in the dimension (thickness) of the center portion thereof than a conventional magnet having inner and outer diameter side surfaces formed in a circular-arc shape. As a result, the amount of effective magnetic flux is increased, and inductance is reduced, and correspondingly, an increase in torque is achieved. The rotor 3 is smaller in outer diameter than a conventional motor (e.g., φ45 → φ40: about 10% reduction), and thus the rotor inertia is reduced. Further, with the reduction in outer diameter, the interval between magnets is reduced. As a result, a magnetic flux density in a gap between the toothed part and the magnet is increased. In this point, as well, an increase in torque is achieved.

In the rotor core 14, the plurality of (six, in the present embodiment) magnets 15 having the D-shaped cross section are equally arranged in the circumferential direction, so that the rotor core 14 has a substantially regular polygonal (hexagonal, in the present embodiment) cross section. The inner peripheral part 15b of each of the magnets 15 is fitted to a flat part 16a constituting the outer periphery of the rotor core 14. The magnets 15 are held by synthetic resin magnet holders 17 (17a to 17c) and arranged on the outer peripheries of the respective rotor cores 14a to 14c. An engagement groove 19 with which a leg part 18 of the magnet holder 17 is engaged is formed at six corner parts of the rotor core 14. The engagement groove 19 is formed so as to extend along the axial direction. The magnets 15 are held by the magnet holders 17a to 17c and arranged in three rows in the axial direction. A bottomed cylindrical magnet cover 20 is fitted to the outside of the magnets 15.

A resolver 41 serving as a rotation angle detection means is disposed between the rotor 3 and the bracket 8 (to the left of the rotor in FIG. 1) . The resolver 41 is constituted of a resolver rotor 42 and a resolver stator 43 disposed outside the resolver rotor 42. The resolver rotor 42 is mounted to the left end portion of the magnet holder 17a and configured to be rotated together with the rotor 3 . The resolver stator 43 is press-fitted and fixed inside a metal resolver holder 44. The resolver holder 44 is formed into a bottomed cylindrical shape. A resolver mounting part 8b protrudes from the center portion of the bracket 8. The resolver holder 44 is lightly press-fitted in the outer periphery of the resolver mounting part 8b and fixed, together with the terminal unit 11, to the inside of the bracket 8 with the screw 9.

In the motor 1, the magnet 15 having the D-shaped cross section is used for increase in torque. The present inventors removed an auxiliary groove 52 from the configuration illustrated in FIG. 7 so as to increase effective magnetic for further increase in torque. However, in the absence of the auxiliary groove 52, although torque is increased, cogging torque is disadvantageously increased. The increase in cogging torque is unfavorable for a brushless motor for EPS, because it may cause deterioration of steering feeling. Thus, the present inventors investigated the causal relationship between the removal of the auxiliary groove and increase in cogging torque. As a result, it was presumed that forming the flat part 16a in the rotor core 14 in association with adoption of the D-shaped magnet contributed to the increase in cogging torque.

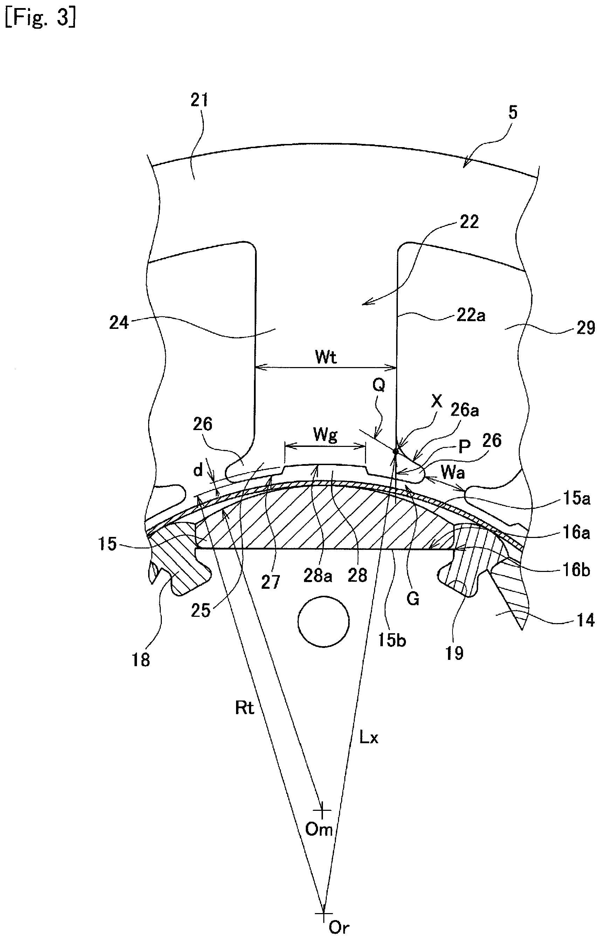

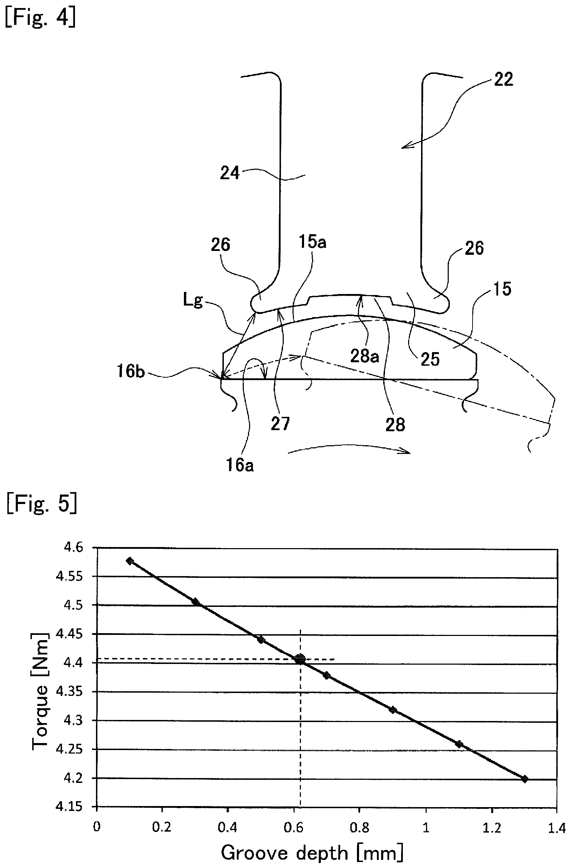

FIG. 3 is an enlarged view illustrating a configuration, in the vicinity of the tooth tip part in the motor 1. FIG. 4 is an explanatory view illustrating a state where the rotor core 14 and magnet 15 are moved in association with rotation of the rotor 3. As illustrated in FIG. 4, when the rotor 3 is rotated, the rotor core 14 and magnet 15 are also rotated, and at this time, a distance Lg between a corner part 16b between adjacent flat parts 16a and toothed part 22 is varied. That is, the closer the corner part 16b is to the center of the toothed part 22, the smaller the distance Lg between the corner part 16b and the tooth tip surface 27 becomes. In the configuration of FIG. 7, an outer peripheral surface 53a of a rotor core 53 has a circular arc shape concentric with a tip surface 51a of the toothed part 51, so that the distance between the outer peripheral surface 53a and the tip surface 51a is not varied even when the rotor is rotated. On the other hand, in the motor 1, the distance between the corner part 16b of the rotor core 14 and the tooth tip surface 27 is varied with rotation of the rotor 3, which is considered to cause the increase in cogging torque.

Thus, in the motor 1 according to the present invention, one groove part 28 is formed in the tooth tip surface 27 so as to suppress a variation of the distance Lg accompanying rotation of the rotor 3. The groove part 28 is formed so as to be recessed in the center of the tip part of the toothed part 22 and to extend over the entire length of the rotor core 14 along the axial direction. Assuming that the distance between the center (concentric with the center Or of the rotor 3) of the stator 2 and a tooth/slant intersection X is Lx, and the radius of a stator inner diameter (inner diameter of the tooth tip surface 27) is Rt, a depth d of the groove part 28 is set to a value 1/3 or less of the difference between Lx and Rt (0 < d ≤ (Lx - Rt) /3) . The tooth/slant intersection X refers to the intersection between an extension line P of a circumferential side surface 22a of the toothed part 22 and an extension line Q of a slope 26a of the slant part 26 of the toothed part 22.

A width Wg of the groove part 28 is smaller than a width Wt of the tooth main body 24 and set to a value 1/2 or more of the width Wt (Wt > Wg > Wt/2). In addition, the groove part 28 is a kind of clearance groove for allowing passage of the corner part 16b, so that a bottom surface 28a of the groove part 28 is formed into a circular arc shape, which is concentric with the stator 2 and the rotor 3.

By forming the thus configured groove part 28 in the tooth tip surface 27, a variation in the distance Lg between the rotor core corner part 16b and the tooth tip surface 27 is alleviated (reduced), whereby cogging torque can be reduced. Further, the groove part 28 has the circular-arc shaped bottom surface 28a, so that, in addition to the distance Lg, the air gap G between the magnet and the toothed part can be made uniform. In this point, as well, cogging torque can be reduced. Further, unlike the auxiliary groove 54 (groove like a pseudo slot) of FIG. 7, the groove part 28 has a configuration like a clearance groove and is thus smaller (shallower) in depth than the conventional auxiliary groove 54, with the result that the air gap G at a portion corresponding to the groove part 28 can be reduced. As a result, effective magnetic flux can be increased further than the conventional motor provided with the auxiliary groove 54, and although the groove part 28 is formed, torque reduction due to the influence of formation of the groove part 28 can be suppressed. In the motor 1, an increase in torque is achieved by use of the D-shaped magnet, which compensates for a torque reduction due to formation of the groove part 28.

Further, in the motor 1, the opening width Wa between the adjacent toothed parts 22 is set larger than and the slant part 26 of the toothed part 22 is smaller than in the conventional motor of FIG. 7. In addition, since the groove part 28 is formed in the toothed part 22, the width of the slant part 26 is further reduced. As a result, the slant part 26 is easily magnetically saturated, so that the amount of magnetic flux flowing in the stator 2 side at the time of non-energized rotation can be controlled. Thus, by setting the depth or width of the groove part 28 adequately, the slant part 26 can be magnetically saturated. In this respect, as well, cogging torque can be reduced.

According to the analysis made by the present inventors, by setting the depth d and the width Wg of the groove part 28 to 0.63 mm and 4 . 9 mm, respectively, in the motor 1 in which the radius Rt is set to, e.g., 21 mm, cogging torque of the motor 1 can be reduced to about 12 mN/m or less. Further, as illustrated in FIG. 5, when the depth d is set to 0.63 mm, torque is about 4.41 Nm. Since torque is about 4.62 Nm in the absence of the groove part 28, reduction in torque due to formation of the groove part can be suppressed to about 4.5% or less. That is, in the motor 1, it is possible to reduce cogging torque to about 12 mN/m or less while ensuring torque of about 4.41 Nm by reducing a reduction in torque to about 4.5% or less. As a result, optimum specification suitable for a high-torque and low-cogging torque motor for EPS can be achieved.

The present invention is not limited to the above-described embodiment and may be variously modified without departing from the gist of the invention.

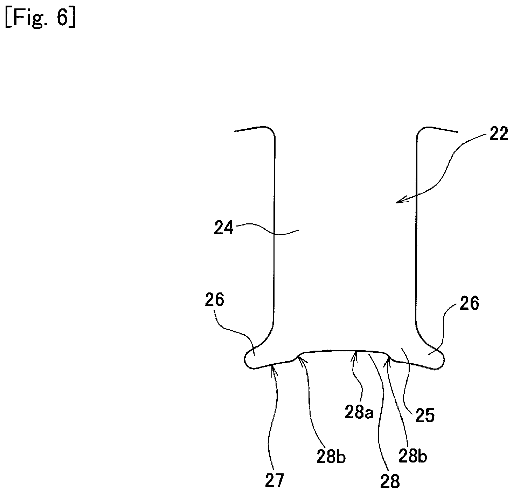

For example, in the above embodiment, the brushless motor has a 6-pole 9-slot (6P9S) structure; however, the present invention may be widely applied to a motor of integral multiple of 2P3S. Further, in the above embodiment, the stator core has the back core part integrally formed therewith; however, the present invention may be applied to a so-called split core type stator core in which the back core part is split in the circumferential direction. Furthermore, in the above embodiment, a corner part 28b on both sides of the groove part 28 has an angular shape; however, as illustrated in FIG. 6, the corner part 28b may be formed into a curved surface continued from the bottom surface 28a of the groove part 28 to tooth tip surface 27. This makes a variation in the distance Lg further smooth to thereby further reduce cogging torque.

### Industrial Applicability

The brushless motor according to the present invention can be widely applied not only to a drive source for an electric power steering device, but also to other electric devices mounted in an automobile, hybrid cars, electric cars, and electric appliances such as an air-conditioner.

### Reference Signs List

- 1:: Brushless motor
- 2:: Stator
- 3:: Rotor
- 4:: Housing
- 4a:: Bearing accommodating part
- 5:: Stator core
- 6:: Coil
- 6a:: Coil end part
- 7:: Bus bar unit
- 8:: Bracket
- 8a:: Bearing fixing part
- 8b:: resolver mounting part
- 9:: Screw
- 11:: Terminal unit
- 12:: Shaft
- 13a, 13b:: Bearing
- 14:: Rotor core
- 14a to 14c:: Rotor core
- 15:: Magnet
- 15a:: Outer peripheral part
- 15b:: Inner peripheral part
- 16a:: Rotor core flat part
- 16b:: Rotor core corner part
- 17:: Magnet holder
- 17a to 17c:: Magnet holder
- 18:: Magnet holder leg part
- 19:: Engagement groove
- 20:: Magnet cover
- 21:: Back core part
- 22:: Toothed part
- 22a:: Circumferential side surface
- 23:: Insulator
- 24:: Tooth main body
- 25:: Tooth tip part
- 26:: Slant part
- 26a:: Slope
- 27:: Tooth tip surface
- 28:: Groove part
- 28a:: Bottom surface
- 28b:: Corner part
- 29:: Slot
- 31:: Bus bar
- 32:: Power supply terminal
- 33:: Bus bar terminal
- 34:: Power terminal
- 34a:: One end side
- 34b:: Other end side
- 35:: Opening part
- 41:: Resolver
- 42:: Resolver rotor
- 43:: Resolver stator
- 44:: Resolver holder
- 51:: Toothed part
- 51a:: Tip surface
- 52:: Auxiliary groove
- 53:: Rotor core
- 53a:: Outer peripheral surface
- 54:: Auxiliary groove
- 55:: Back core part
- d:: Groove depth
- P:: Extension line of circumferential side surface of tooth main body
- Q:: Extension line of slant part slope
- X:: Tooth/slant intersection
- Or:: Rotor center (= stator center)
- Lx:: Distance between stator center and tooth/slant intersection X
- Rt:: Radius of inner diameter of tooth tip surface
- Wg:: Width of groove part in circumferential direction
- Wt:: Width of tooth main body in circumferential direction
- G:: Air gap
- Lg:: Distance between rotor core corner part and tooth tip surface
- Wa:: Opening width between adjacent toothed parts
- Om:: Arc center of magnet outer peripheral part
- θ:: Skew angle
- Lr:: Length of rotor core in axial direction
- Ls:: Length of stator core in axial direction

## Claims

1. A brushless motor **characterized by** comprising:
a stator having a ring-shaped back core part and a plurality of toothed parts formed so as to protrude inward in the radial direction from the back core part; and
a rotor rotatably disposed inside the stator and having a rotor core mounted on the rotation axis and a magnet disposed on the outer peripheral surface of the rotor core, wherein
the toothed parts each include:
a tooth main body extending in the radial direction from the back core part;
a tip part formed on the inner diameter side of the tooth main body so as to be integrate with the tooth main body and having a pair of slant parts formed on both sides thereof so as to protrude in the circumferential direction;
a tip surface formed on the inner diameter side end surface of the tip part so as to face the magnet through an air gap; and
a groove part formed so as to be recessed in the center of the tip surface in the circumferential direction and to extend along the rotation axis direction,
assuming that the distance between the center of the rotor and a tooth/slant intersection X, which is the intersection between an extension line P of a circumferential side surface of the tooth main body and an extension line Q of a slope of the slant part, is Lx, and the radius of the inner diameter of the tooth tip surface is Rt, a depth d of the groove part is set to a value 1/3 or less of the difference between Lx and Rt (0 < d ≤ (Lx - Rt)/3), and
a width Wg of the groove part is smaller than a width Wt of the tooth main body and set to a value 1/2 or more of the width Wt (Wt > Wg ≥ Wt/2).

2. The brushless motor according to claim 1, **characterized in that**
the bottom surface of the groove part is formed into a circular arc shape centered at the center of the rotation axis and concentric with the tip surface.

3. The brushless motor according to claim 1 or 2, **characterized in that**
the magnet has a circular-arc shaped outer peripheral surface, and
the outer peripheral surface of the magnet has a different curvature from those of the bottom surface of the groove part and the tip surface.

4. The brushless motor according to any one of claims 1 to 3, **characterized in that**
the magnet has a D-shape in cross section perpendicular to the axial direction and has a circular-arc shaped outer peripheral surface and a flat inner peripheral surface.

5. The brushless motor according to claim 4, **characterized in that**
the rotor core has a regular polygonal shape in cross section and has a flat part constituting the outer peripheral surface thereof, to which the inner peripheral surface of the magnet is fitted, and
the groove part is configured such that a variation in the distance between a corner part formed between adjacent flat parts and the toothed part caused in association with rotation of the rotor is alleviated.

6. The brushless motor according to any one of claims 1 to 5, **characterized in that**
a length Ls of the stator core in the axial direction is larger than a length Lr of the rotor core in the axial direction (Ls > Lr).

7. The brushless motor according to any one of claims 1 to 6, **characterized in that**
the rotor has a skew structure, and
the skew angle θ of the rotor is set in a range of 20° to 24°.

8. The brushless motor according to any one of claims 1 to 7, **characterized by** being used as a drive source for an electric power steering device.
